Europäisches Patentamt

European Patent Office

Office européen des brevets

(11) Veröffentlichungsnummer: **0 081 673**
A2

(12) # EUROPÄISCHE PATENTANMELDUNG

(21) Anmeldenummer: **82110251.4**

(51) Int. Cl.³: **G 01 D 5/16**

(22) Anmeldetag: **06.11.82**

(30) Priorität: **12.12.81 DE 3149287**

(43) Veröffentlichungstag der Anmeldung: **22.06.83**
Patentblatt **83/25**

(84) Benannte Vertragsstaaten: **CH FR GB IT LI SE**

(71) Anmelder: **DIETER GRÄSSLIN Feinwerktechnik,
Bundesstrasse 36, D-7742 St. Georgen (DE)**

(72) Erfinder: **Kammerer, Gerd, Schiltachweg 15,
D-7742 St.Georgen (DE)**

(74) Vertreter: **Thoma, Friedrich Xaver, Dipl.-Ing.,
Leimengrubweg 12, D-7612 Haslach i.K. (DE)**

(54) **Eingabevorrichtung für digital-elektronische Geräte.**

(57) Bei dieser Eingabevorrichtung mit einem widerstands-veränderlichen Betätigungselement (2), das einen Impuls-generator (1) beaufschlagt, zur Änderung der Impulsfre-quenz, für digitalelektronische Geräte, ist das Betätigungs-element (2) ein druckabhängig veränderliches Widerstands-element, das einen Impulsgenerator (1) zur Änderung der Impulsfrequenz beaufschlagt.

Eingabevorrichtung für digital-elektronische Geräte

Die Erfindung betrifft eine Eingabevorrichtung mit einem widerstandsveränderlichen Betätigungselement, das einen Impulsgenerator beaufschlagt zur Änderung der Impulsfrequenz, für digital-elektronische Geräte.

Eine Einrichtung der eingangs genannten Art ist beispielsweise aus der DE-OS 27 26 744 bekannt. Das Betätigungselement ist dort ein Drehwiderstand bzw. Potentiometer, mit dem die Frequenz eines Oscillators bzw. Impulsgenerators geändert werden kann, dessen widerstandsabhängige Impulsfolge einen elektronischen Zähler beaufschlagt.

Zur vorwärts- oder rückwärtszählenden, schnellen oder langsamen Eingabe entsprechender Impulse ist in einer anderen bekannt gewordenen Ausführung ein dualer oder Zweifachdrehwiderstand mit einer symetrischen Nullstellung versehen, die einer Impulsfrequenz eines Impulsgenerators gleich Null entspricht. Dieser Drehwiderstand steuert dann je nach Drehrichtung die aufwärts-oder abwärtszählende Frequenz eines Impulsgenerators. Dieser kann dort aus einem Doppelflipflop gebildet sein (DE-OS 28 56 249 ).

Der Erfindung liegt nun die Aufgabe zu grunde, bei einer Eingabevorrichtung der eingangs genannten Art anstelle eines Drehwiderstandes bzw. Potentiometers ein anderes gleichwertiges Betätigungselement vorzusehen, das einfach und zuverlässig in einer derartigen Vorrichtung integriert werden kann, und das wirtschaftlich herstellbar ist.

Diese Aufgabe wird erfindungsgemäß dadurch gelöst, daß das Betätigungselement ein druckabhängig veränderliches Widerstandselement ist, das

0081673

einen Impulsgenerator zur Änderung der Impulsfrequenz beaufschlagt.

Ein derartiges druckabhängig veränderliches Widerstandselement soll dort bei einem Steuerdruck Null einen Widerstand an einem Impulsgenerator aufweisen, dessen Impulsfrequenz dann Null ist. Bei einem maximal druckbeaufschlagten derartigen Betätigungselement soll der dort gebildete Widerstand an einem Impulsgenerator, beispielsweise eine Impulsfrequenz von 30 Impulsen/Sekunde erzeugen.

In Weiterbildung der Erfindung ist es vorgesehen, ein solches Betätigungselement mit einem dualen derartigen Widerstandselement zu versehen, bei dem die Widerstandskreise räumlich und elektrisch voneinander getrennt beaufschlag bar sind zur Änderung der jeweiligen Widerstandswerte und um mit einer derartigen Vorrichtung bei digital-elektronischen Geräten,insbesondere bei elektronischen Zeitschaltgeräten, eine Impulsfrequenz von Null Impulsen/Sekunde bis ca. 30 Impulse/Sekunde vorwärts-oder rückwärtszählend, eingeben zu können.

Ein derartiges betätigungsdruckabhängig veränderliches Widerstandselement kann insbesondere aus einem gummielastischen Körper bestehen, der mit elektrisch leitenden Bestandteilen, insbesondere mit relativ kleinen elektrisch leitenden Kugeln durchsetzt ist, die in entspanntem Zustand eines solchen Körpers zueinander und zu zwei bodenseitigen Leiterbahnen einen hohen Übergangswiderstand aufweisen, der druckabhängig verkleinert werden kann für die Ansteuerung eines Impulsgenerators zur Änderung der Generatorfrequenz. Ein derartiger Körper kann als ein tastenförmiges Betätigungselement ausgebildet sein und in seiner räumlichen Dicke folienartig nieder hergestellt sein.

Wie die Erfindung im einzelnen ausgeführt sein kann, wird im folgenden anhand mehrerer, in der Zeichnung dargestellter, Ausführungsbeispiele beschrieben. Es zeigt

    Fig. 1 ein Blockschaltbild eines, durch einen Drehwiderstand in der Impulsfrequenz regelbaren, Umpulsgenerators,

    Fig. 2 eine Querschnittsansicht durch ein druckabhängig veränderliches Betätigungselement in einer Stellung entsprechend
einem Betätigungsdruck Null,

Fig. 3 eine Querschnittsansicht durch ein Element nach Fig. 2 in
einer räumlichen Verformung entsprechend einem mittleren
Betätigungsdruck,

Fig. 4 eine Querschnittsansicht durch ein Element nach Fig.2 und 3
in einer räumlichen Verformung entsprechend einem starken
Betätigungsdruck,

Fig. 5 ein Blockschaltbild einer vorwärts- oder rückwärtszählenden
einstellbaren Eingabevorrichtung mit einem dualen Widerstandselement,

Fig. 6 eine Querschnittsansicht durch ein duales druckabhängig
veränderliches Betätigungselement mit einem Kipphebel,

Fig. 7 eine Querschnittsansicht durch ein duales druckabhängig
veränderliches Betätigungselement mit einem Drehhebel,

Fig. 8 eine Draufsicht auf ein folienartiges Betätigungselement
mit einzelnen Widerstandsstufen in offener Ausführung,

Fig. 9 eine Querschnittsansicht durch Fig. 8 in geschlossener,
geberbestückter Ausführung.

In den Figuren sind gleiche, oder einander entsprechende Bauteile
mit gleichen Bezugszeichen versehen.

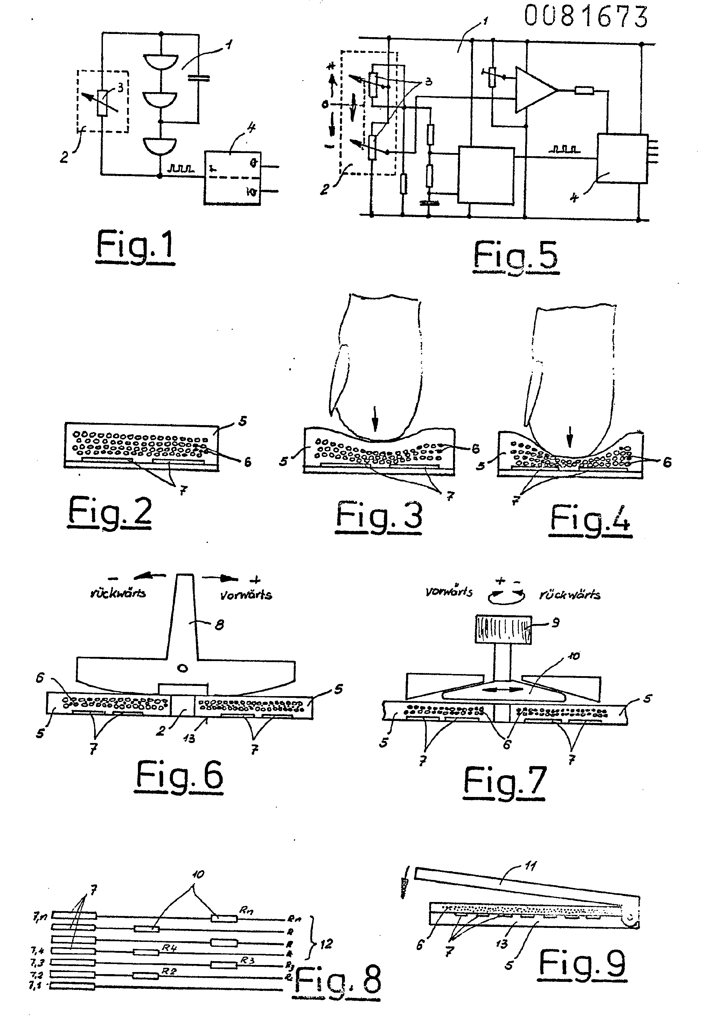

In der Fig. 1 ist ein an sich bekannter elektronischer Impulsgenerator 1 gezeigt, der in seiner ausgangsseitigen Impulsfrequenz in einer
Größenordnung von 0 bis ca. 30 Impulse/sec. regelbar ist. Die Regelung erfolgt dort durch ein widerstandsveränderliches Betätigungselement 2 in der Form eines Drehwiderstandes bzw. Potentiometers 3.
4 bezeichnet dort ein Flip-Flop, dessen Ausgangsimpulse zum Stellen
oder zur Programmierung von digital-elektronischen Geräten, die insbesondere mit einer elektronischen alphanumerischen Anzeigevorrichtung versehen sind, wie z.B. Schaltuhren, Programmsteuergeräte, Zeitrelais, Zeit- oder Stückzähler, vorgesehen sind.

Anstelle eines dort üblicherweise verwendeten allgemein bekannten

0081673

regelbaren Widerstandes, der drehend oder schiebend betätigt werden kann, ist es nach der Erfindung vorgesehen, dort ein druckabhängig veränderliches Element einzusetzen. D.h. die Betätigung eines derartigen Elementes soll mittelbar oder unmittelbar ausschließlich durch Druck erfolgen. Dabei ist daran gedacht, daß ein solches widerstandsdruckabhängiges Betätigungselement ein Halbleiterelement, oder ein piezo-elektrisches Element, oder ein druck/magnetisch beaufschlagtes Hallelement oder ein sonstiges Körperelement sein kann.

So ist es insbesondere vorgesehen, wie die Figuren 2 bis 4 zeigen, daß ein derartiges druckabhängig veränderliches Widerstandselement aus einem gummielastischen Körper 5 bestehen kann, der mit elektrisch leitenden Bestandteilen, insbesondere mit relativ kleinen elektrisch leitenden Kugeln 6, durchsetzt ist, die in entspanntem Zustand eines solchen Körpers, gemäß Fig. 2, zueinander und zu zweit bodenseitig angeordneten Leiterbahnen 7 einen relativ hohen Übergangswiderstand an den Leiterbahnen 7 aufweisen, der druckabhängig, wie im folgenden gezeigt wird, verkleinert werden kann zur Ansteuerung eines Impulsgenerators 1 nach Fig. 1 zur Änderung der Generatorfrequenz. Die Generatorfrequenz in dieser räumlich entspannten Lage des Körpers 5 nach Fig. 2 kann 0 Impulsen/sec. entsprechen. Die Kugeln 6 haben dort keine Verbindung untereinander und den Leiterbahnen 7. Ein derartiger Körper 5 kann als tastenförmiges Betätigungselement ausgebildet sein und in seiner räumlichen Dicke folienartig nieder oder dünn hergestellt sein.

Die Fig. 3 zeigt den Körper 5 in einer räumlichen Verformung, entsprechend einem mittleren manuellen Betätigungsdruck. Durch diese Druckbeaufschlagung sind dort einige der Kugeln 6 miteinander und den Leiterbahnen 7 in eine elektrisch leitende, jedoch immer noch relativ hochohmige Verbindung getreten. Die Generatorfrequenz kann sich hierdurch stufenlos von 0 Impulsen/sec. auf ca. 5 bis 8 Impulsen/sec. eingestellt haben.

Wird der Betätigungsdruck noch weiter erhöht, Fig. 4, dann treten dort

relativ viele Kugeln 6 miteinander und den Leiterbahnen 7 in eine elektrisch leitende Verbindung, was zur Folge hat, daß der Widerstand des Körpers 5 weiter verkleinert wird, der die Generatorfrequenz eines Impulsgenerators dadurch auf ca. 20 bis 30 Impulsen/sec. erhöhen kann.

Ein derartiger bewirktes Stellen oder Programmieren digital-elektronischer Geräte erlaubt nur in einer Richtung, d.h. nur ein vorwärts- oder nur ein rückwärtszählendes Stellen oder Programmieren, sofern dort keine besonderen Schalter oder Tasten zur Zählrichtungsumkehr unabhängig vom Betätigungselement 2 vorgesehen werden.

Die Fig. 5 zeigt eine an sich bekannte vorwärts- oder rückwärtszählende, stellbare Eingabevorrichtung. Dort ist ein duales oder ein sogenanntes Tandemwiderstandselement vorgesehen, das aus zwei, miteinander gekoppelten, Potentiometer 3 als Betätigungselement 2 wirkt. Dieses Betätigungselement 2 hat dort eine definierte Nullage, die in der Mitte zweier, zueinander symetrischer Dreh- oder Schiebebereiche für eine Widerstandsänderung liegt, d.h. von der Nullage nach der einen Seite erfolgt eine vorwärtszählende Impulsabgabe an einen Flip-Flop 4 und von der Nullage nach der anderen Seite erfolgt eine rückwärtszählende Impulsabgabe am Flip-Flop 4. Es ist nun vorgesehen, auch für eine derartige vorwärts-rückwärtszählende, stell- oder programmierbare Eingabevorrichtung ein Betätigungselement 2 nach den Figuren 2 bis 4 zu verwenden. Entsprechend modifizierte Elemente zeigen die Figuren 6 und 7.

Die Fig. 6 zeigt ein solches duales Betätigungselement 2, das aus zwei einzelnen, nebeneinander angeordneten Körpern 5 auf einer gemeinsamen Bodenplatte 13 besteht. Diese Körper 5 können dort wechselseitig über einen Kipphebel 8 manuell baufschlagt werden zur Änderung des Widerstandes des Körpers 5 zu den Leiterbahnen 7 und damit zur vorwärts- oder rückwärtszählenden, stufenlosen Änderung der Impulsfrequenz eines Impulsgenerators 1 nach Fig. 5.

Die Fig. 7 zeigt ein Bedienungselement 2 für eine manuell drehbare Einstellung des Widerstandes mittels des Drehknopfes 5, der einen Schieber 10 beaufschlagt, der widerum je nach Drehrichtung des Drehknopfes 9 den einen oder den anderen der beiden, nebeneinander angeordneten, Körper 5 beaufschlagt zur Änderung des jeweiligen Widerstandes.

Es liegt im Rahmen der Erfindung, daß auch noch andere konstruktive Lösungswege für derartige Betätigungselemente 2 möglich sind als die, in den Figuren 6 und 7 gezeigten. Solche Betätigungselemente 2 können in enger Anlehnung an eine entsprechende Konstruktion spezifisch geschaffen werden, wobei die Verwendung der beschriebenen Körper 5 die Grundlage jeweils sein kann.

Es ist weiterbildend vorgesehen, ein Betätigungselement 2 nach Fig. 2 bis 4 für bestimmte Anwendungsfälle zu schaffen, wo es nicht unbedingt auf eine stufenlose Widerstandsänderung ankommt, wo jedoch die jeweilige, druckabhängig bewirkte, Widerstandsänderung definiert sein soll. Zu diesem Zweck können die, in den Körpern 5 eingelagerten, Kugeln 6 insbesondere versilbert sein und diese darüber hinaus mit einer sogenannten Widerstandspaste zu umhüllen. Ein, dort unter Druck hergestellter, Strompfad besitzt dann einen relativ geringen Widerstand. Er bildet zunächst am Ausgang an entsprechenden Leiterbahnen eine einfache Reihenschaltung. Wird der Druck erhöht, dann werden weitere Strompfade geschaffen, die dort zum ersten Strompfad parallel geschaltet werden. Somit kann eine relativ definierte stufenweise Widerstandsänderung bewirkt werden.

Diese Ausführung kann jedoch vorteilhaft weitergebildet werden, indem, wie die Figuren 8 und 9 zeigen, auf einer Bodenplatte 13 mehrere Leiterbahnen 7 nebeneinander angeordnet sind, wobei ein Teil davon ausgangsseitig mit einem Festwiderstand 10 in Reihe liegend versehen sind. Der mit Kugeln 6 durchsetzte Körper 5 liegt widerum form- und stoffschlüssig über den Leiterbahnen 7. Ein, nicht ganz parallel zum Körper 5 gelagerter, Hebel 11 verbindet dort unter Druckeinwirkung zunächst die erste Leiterbahn 7,1 ohne eine Widerstandsänderung mit
der zweiten Leiterbahn 7,2. Folglich wird R2 wirksam. Bei stärkerem
Druck des Hebels 11 auf den Körper 5 wird R3 zu R2 geschaltet, durch
die widerstandsniedere Verbindung der Leiterbahn 7,2 mit 7,3 usw.

Es ist dort auch denkbar, daß anstelle des Hebels 11 ein ballig ausgebildeter Druckhebel auf dem Körper 5 abgerollt wird, zur stufenweisen Änderung des Gesamtwiderstand am Ausgang 12. Die Leiterbahnen
7,1 bis 7,n brauchen dort nicht unbedingt mit Festwiderständen 10
versehen zu sein, sondern können unmittelbar einen entsprechenden
elektronischen Prozessor oder ein ähnliches Bauelement beaufschlagen.

Patentansprüche

1. Eingabevorrichtung mit einem widerstandsveränderlichen Betätigungselement, das einen Impulsgenerator beaufschlagt zur Änderung der Impulsfrequenz, für digital-elektronische Geräte, dadurch gekennzeichnet, daß das Betätigungselement (2) ein druckabhängig veränderliches Widerstandselement ist, das einen Impulsgenerator (1) zur Änderung der Impulsfrequenz beaufschlagt.

2. Eingabevorrichtung nach Anspruch 1, dadurch gekennzeichnet, daß das Betätigungselement (2) aus einem gummielastischen Körper (5) besteht, der mit leitenden Bestandteilen durchsetzt ist, die unter Einwirkung von Druck auf den Körper (5) an Leiterbahnen (7) abnehmbar ihren Widerstand zueinander und zwischen den Leiterbahnen (7) von einem hohen Wert zu einem niederen Wert hin verändern.

3. Eingabevorrichtung nach Anspruch 1 und 2, dadurch gekennzeichnet, daß die leitenden Bestandteile kleine elektrisch leitende Kugeln (6) sind.

4. Eingabevorrichtung nach Anspruch 1 bis 3, dadurch gekennzeichnet, daß die Kugeln (6) versilbert sind und in einer Widerstandspaste eingebettet sind.

5. Eingabevorrichtung nach Anspruch 1 bis 4, dadurch gekennzeichnet, daß das Betätigungselement (2) tastenförmig ausgebildet ist.

6. Eingabevorrichtung nach Anspruch 1 bis 5, dadurch gekennzeichnet, daß das Betätigungselement (2) in seiner räumlichen Dicke folienartig ausgebildet ist.

7. Eingabevorrichtung nach Anspruch 1 bis 6, dadurch gekennzeichnet, daß mindestens zwei Betätigungselemente (2) mit einem Körper (5) räumlich nebeneinander auf einer Bodenplatte (13) angeordnet, von einem

gemeinsamen Kipphebel (8) wechselseitig beaufschlagbar sind.

8. Eingabevorrichtung nach Anspruch 9, dadurch gekennzeichnet, daß anstelle eines Kipphebels (8) ein Drehknopf (9) über einen Schieber (10) die Körper (5) wechselseitig beaufschlagen kann.

9. Eingabevorrichtung nach Anspruch 1 bis 8, dadurch gekennzeichnet, daß auf einer Bodenplatte (13) pro Körper (5) mehr als zwei Leiterbahnen (7) angeordnet sind, und daß zwei Leiterbahnen (7) mindestens einen Stromkreis bilden können, zu denen weitere Stromkreise aus Leiterbahnen (7) in Serie oder parallel geschaltet werden können, indem ein Körper (5) mehr oder weniger stark druckbeaufschlagt ist.

10. Eingabevorrichtung nach Anspruch 9, dadurch gekennzeichnet, daß von der zweiten Leiterbahn (7) ab, je weitere Leiterbahn (7) einen Festwiderstand (14) in Serie mit der jeweiligen Leiterbahn (7) geschaltet sein kann.

11. Eingabevorrichtung nach Anspruch 1, dadurch gekennzeichnet, daß das Betätigungselement (2) ein Halbleiterelement, oder ein piezo-elektrisches Element, oder ein druck-magnetisch beaufschlagtes Hallelement, oder ein sonstiges Druck/Widerstand änderndes Körperelement ist.

0081673

Fig.1

Fig.5

Fig.2

Fig.3

Fig.4

rückwärts — + vorwärts

Fig.6

vorwärts + — rückwärts

Fig.7

Fig.8

Fig.9